(19) Europäisches Patentamt / European Patent Office / Office européen des brevets

(11) **EP 3 141 942 B1**

(12) **EUROPEAN PATENT SPECIFICATION**

(45) Date of publication and mention
of the grant of the patent:
**02.05.2018 Bulletin 2018/18**

(51) Int Cl.:
**G02B 21/00** (2006.01)   **G02B 21/06** (2006.01)
**G02B 21/16** (2006.01)   **G01N 21/64** (2006.01)
**G02F 1/11** (2006.01)

(21) Application number: **16179855.8**

(22) Date of filing: **18.07.2016**

(54) **LASER MICROSCOPE AND MICROSCOPY METHOD**

LASERMIKROSKOP UND MIKROSKOPIEVERFAHREN

MICROSCOPE À LASER ET PROCÉDÉ DE MICROSCOPIE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **02.09.2015   JP 2015172857**

(43) Date of publication of application:
**15.03.2017 Bulletin 2017/11**

(73) Proprietor: **Olympus Corporation
Tokyo 192-8507 (JP)**

(72) Inventor: **TANAKA, Ryusuke
Hachioji-shi, Tokyo 192-8507 (JP)**

(74) Representative: **Schicker, Silvia
Wuesthoff & Wuesthoff
Patentanwälte PartG mbB
Schweigerstraße 2
81541 München (DE)**

(56) References cited:
**WO-A1-2011/023593    US-A- 5 914 807
US-B1- 6 577 417**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

{Technical Field}

The present invention relates to laser microscopes and microscopy methods.

{Background Art}

In the related art, a patch-clamp method is a known method for measuring the activity of nerve cells in the field of cranial nerve research (for example, see Patent Literature 1). Since this method requires micro-electrodes to be attached to the cell membranes of cells, the operator needs to be highly skilled. Moreover, this method is problematic in that the number of electrodes that can be set in a specific region of the cranial nerves is limited, and in that since the electrodes are inserted in tissue, the invasiveness is high.

A fluorescence observation method based on multiphoton excitation is a known method for observing a deep tissue area with low invasiveness (for example, see Patent Literature 2).

WO 2011/023593 A1 discloses a method of imaging a cellular sample by multi-photon imaging. The method comprises: providing a multi-photonic excitation beam; splitting the multi-photonic excitation beam into a plurality of N sub-beams; modulating the amplitude of the plurality of N sub-beams to create N respective temporal modulation pattern; focusing the plurality of N modulated sub-beams to N respective spatially separated focal points P1... PN within the cellular sample; simultaneously detecting fluorescent signals emitted from the N focal points P1... PN; and demodulating the detected fluorescent signals so that fluorescence data relating to the respective focal points P1...PN may be obtained.

US 6 577 417 B1 employs a single tunable filter WDM Bragg cell to both wavelength demultiplex and detects incoming light beams by the application of a DC tuning signal for wavelength selection, together with an AC component for facilitating detection of data impressed upon selected incoming demultiplexed beams, all in the optical domain, in contrast with the electrical domain, to enhance processing speed. The AC component can perform hetrodyne detection for TV and telephone analog communication systems, or can detect digital signals for DSL internet communication systems, and cost savings result from the use of a single compact cell tuned by the composite signal permitting demultiplexing and detecting in one cell component.

{Citation List}

{Patent Literature}

    {PTL 1}
    Japanese Unexamined Patent Application, Publication No. 2005-227145
    {PTL 2}
    Japanese Unexamined Patent Application Publication No. 2010-8082

{Summary of Invention}

{Technical Problem}

However, the fluorescence observation method based on multiphoton excitation according to Patent Literature 2 involves detecting fluorescence emitted from a focal position of ultrashort-pulse laser light and collected by an objective lens via various paths due to scattering. This is disadvantageous in that simultaneous irradiation of a large number of ultrashort-pulse laser light beams (multi-beam observation) is not possible.

The present invention has been made in view of the circumstances described above, and an object thereof is to provide a laser microscope and a microscopy method that allow simultaneous observation of fluorescence generated by multiphoton excitation using multiple beams and that also allow simultaneous observation of multiple points with a high signal-to-noise ratio with low invasiveness.

{Solution to Problem}

In order to achieve the aforementioned object, the present invention provides a laser microscope according to claim 1.

An aspect provides a laser microscope including: a modulation unit that applies different modulations to a plurality of ultrashort-pulse laser light beams of the same type emitted from a light source unit; an illumination optical system that simultaneously focuses the plurality of ultrashort-pulse laser light beams, to which the different modulations are applied by the modulation unit, onto different positions of a sample; a fluorescence detecting device that detects fluorescence generated at a focal position of each ultrashort-pulse laser light beam and performs photoelectric conversion of the fluorescence; and a demodulation unit that demodulates an output from the fluorescence detecting device based on modulation information from the modulation unit.

According to this aspect, the plurality of ultrashort-pulse laser light beams of the same type emitted from the light source unit undergo different modulations in the modulation unit and are subsequently focused simultaneously onto different positions of the sample by the illumination optical system. At the focal position of each ultrashort-pulse laser light beam, the photon density is locally increased so that a fluorescent material is excited, whereby fluorescence is generated. The generated fluorescence is scattered in all directions, and a portion thereof is detected and photo-electrically converted by the fluorescence detecting device after traveling along various paths. Then, an electric signal output from the fluorescence detecting device is demodulated by the demodulation unit based on modulation information from the modulation unit.

Specifically, although the fluorescence detected by the fluorescence detecting device includes the fluorescences simultaneously generated at the plurality of focal positions, the fluorescences also inherit the modulations applied to the plurality of ultrashort-pulse laser light beams. Therefore, by using the demodulation unit to demodulate the mixed signal detected by the fluorescence detecting device based on each piece of modulation information, the fluorescence generated in correspondence with each ultrashort-pulse laser light beam can be separated and extracted. Accordingly, fluorescence generated by multiphoton excitation can be observed simultaneously using multiple beams, and multiple points can be observed simultaneously with a high signal-to-noise ratio with low invasiveness.

In the above aspect, the laser microscope may further include a spatial light modulation device that modulates the wavefront of at least one of the plurality of ultrashort-pulse laser light beams.

Accordingly, by using the spatial light modulation device to modulate the wavefront of at least one of the ultrashort-pulse laser light beams, the ultrashort-pulse laser light beam can be focused onto a depth position different from the focal plane of the illumination optical system, whereby the plurality of ultrashort-pulse laser light beams can be focused onto different depth positions of the sample.

Furthermore, in the above aspect, the modulation unit may apply intensity modulation of different wavelengths to the plurality of ultrashort-pulse laser light beams.

Furthermore, in the above aspect, the modulation unit may apply intensity modulation of different phases to the plurality of ultrashort-pulse laser light beams.

Accordingly, the ultrashort-pulse laser light beams can be readily modulated and demodulated.

Another aspect of the present invention provides a microscopy method according to claim 5.

{Advantageous Effects of Invention}

The present invention is advantageous in that it allows simultaneous observation of fluorescence generated by multiphoton excitation using multiple beams and that it also allows simultaneous observation of multiple points with a high signal-to-noise ratio with low invasiveness.

{Brief Description of Drawings}

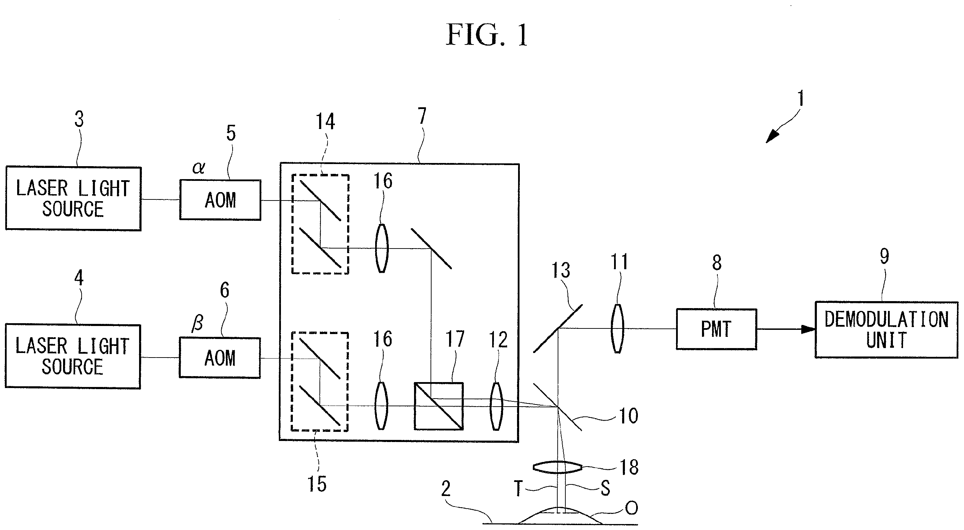

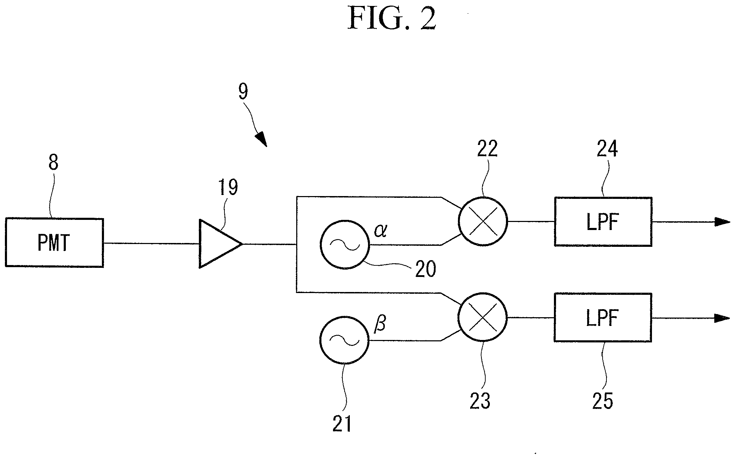

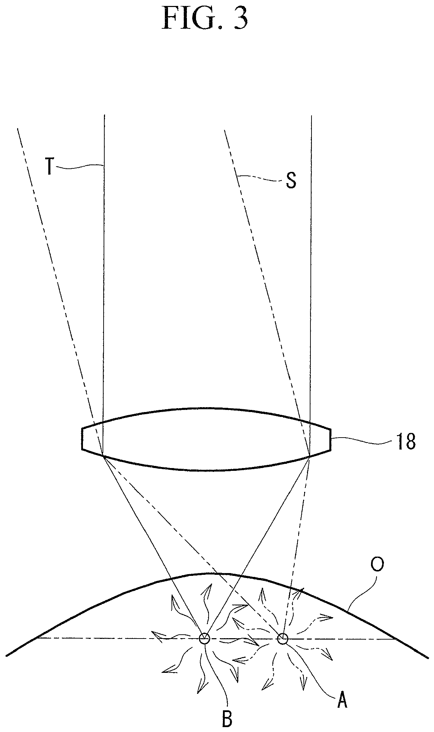

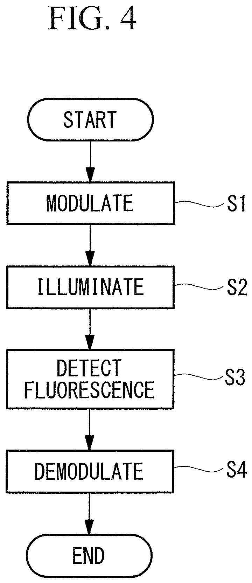

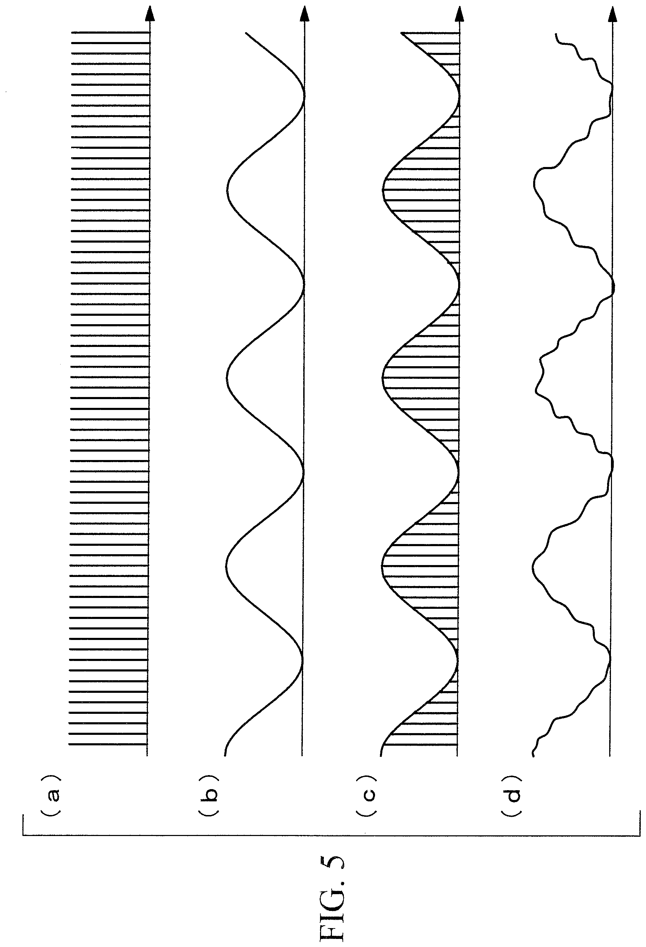

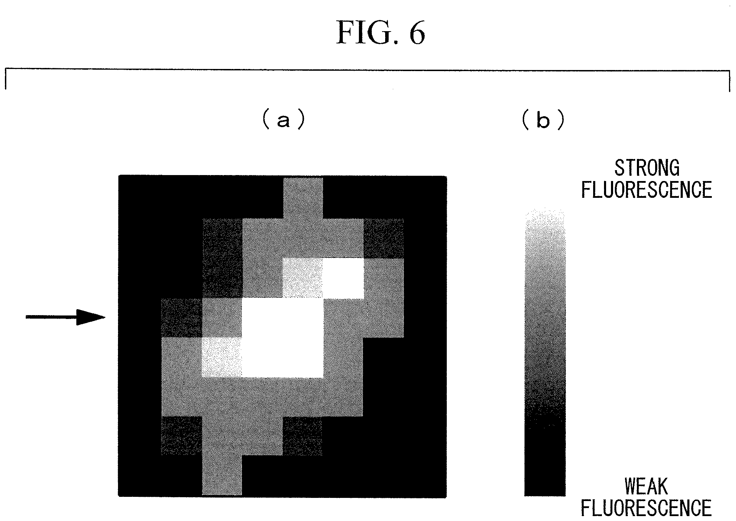

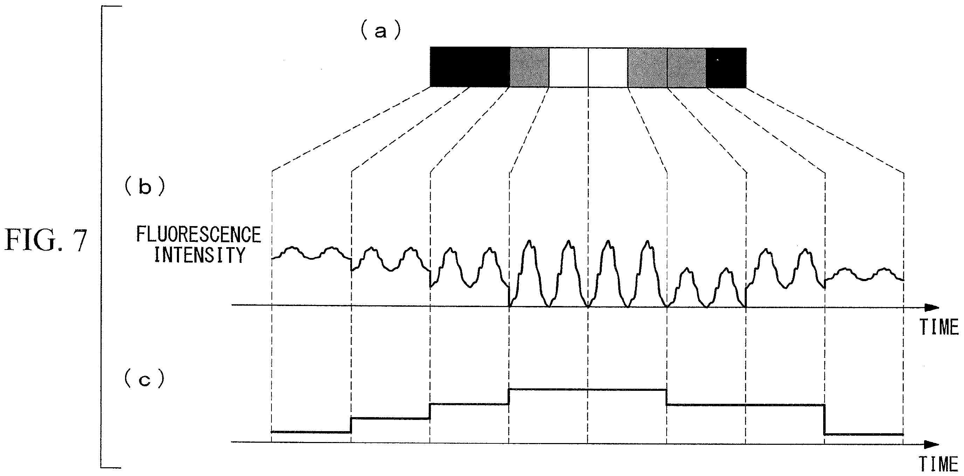

{Fig. 1} Fig. 1 schematically illustrates a laser microscope according to an embodiment of the present invention.
{Fig. 2} Fig. 2 schematically illustrates a demodulation unit of the laser microscope in Fig. 1.
{Fig. 3} Fig. 3 illustrates ultrashort-pulse laser light beams focused on a sample by the laser microscope in Fig. 1.
{Fig. 4} Fig. 4 is a flowchart illustrating a microscopy method according to an embodiment of the present invention.
{Fig. 5} Fig. 5(a) illustrates the pulse train of each ultrashort-pulse laser light beam output from a laser light source of the laser microscope in Fig. 1, Fig. 5(b) illustrates a modulation signal superposed on the ultrashort-pulse laser light beam in Fig. 5(a), Fig. 5(c) illustrates the pulse train of the ultrashort-pulse laser light beam modulated with the modulation signal in Fig. 5(b), and Fig. 5(d) illustrates a fluorescence signal generated at a focal position when the ultrashort-pulse laser light beam is radiated onto the sample.
{Fig. 6} Fig. 6(a) illustrates a fluorescence image acquired by two-dimensionally scanning an ultrashort-pulse laser light beam using the microscopy method in Fig. 4, and Fig. 6(b) illustrates a scale indicating the fluorescence intensity in Fig. 6(a).
{Fig. 7} Fig. 7(a) illustrates the fourth row (i.e., the row indicated by an arrow) of the image in Fig. 6(a), Fig. 7(b) illustrates a fluorescence intensity signal when scanning is performed from left to right, and Fig. 7(c) illustrates a demodulated fluorescence intensity signal.

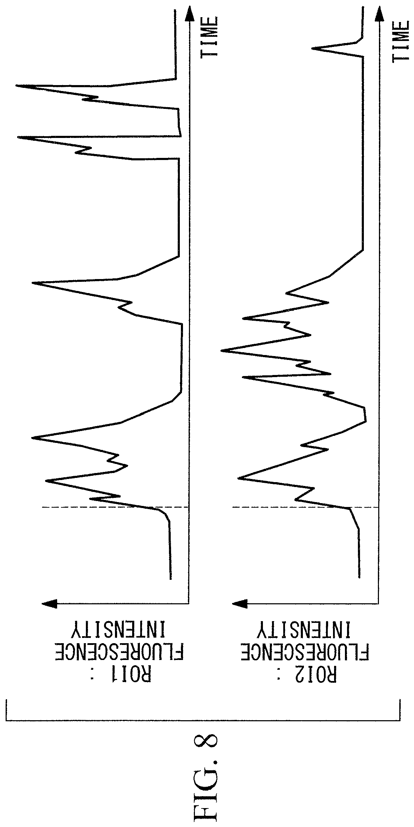

{Fig. 8} Fig. 8 illustrates waveforms of simultaneously-acquired changes in fluorescence intensities of two regions of interest before a learning process in accordance with the microscopy method in Fig. 4, the two regions of interest being within a predetermined range set in the sample.

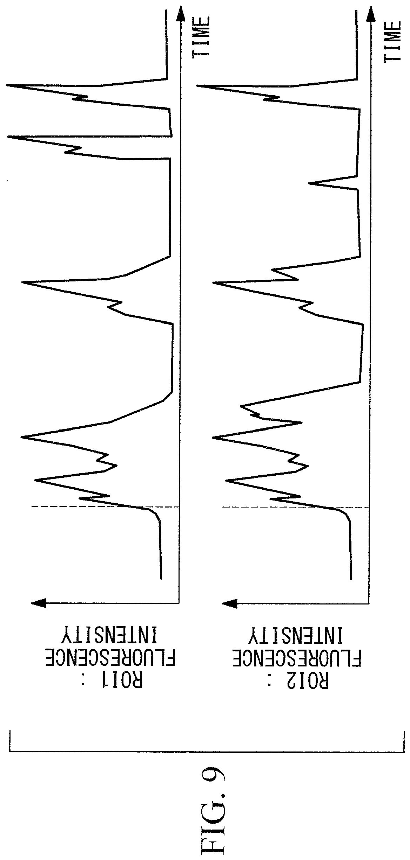

{Fig. 9} Fig. 9 illustrates waveforms of simultaneously-acquired changes in the fluorescence intensities of the two regions of interest after the learning process in accordance with the microscopy method in Fig. 4, the two regions of interest being within the predetermined range set in the sample.

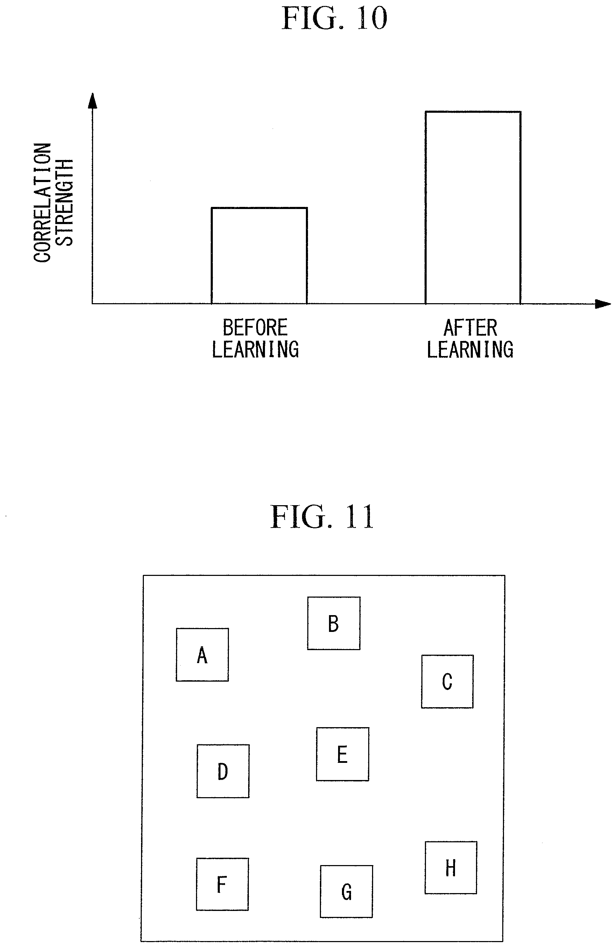

{Fig. 10} Fig. 10 illustrates the correlation strength between the regions of interest in Figs. 8 and 9.

{Fig. 11} Fig. 11 illustrates eight regions of interest in a predetermined range set in the sample by using the microscopy method in Fig. 4.

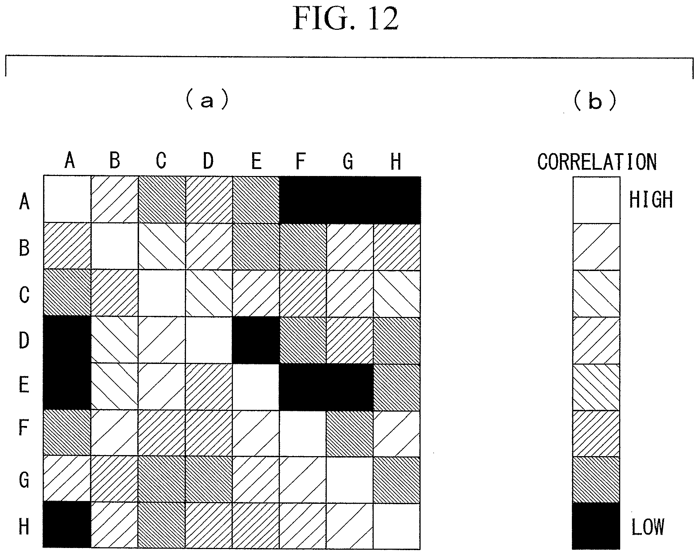

{Fig. 12} Fig. 12(a) illustrates a fluorescence image in which the regions of interest in Fig. 11 are applied to a correlation matrix, and Fig. 12(b) illustrates the correlation strength in Fig. 12(a).

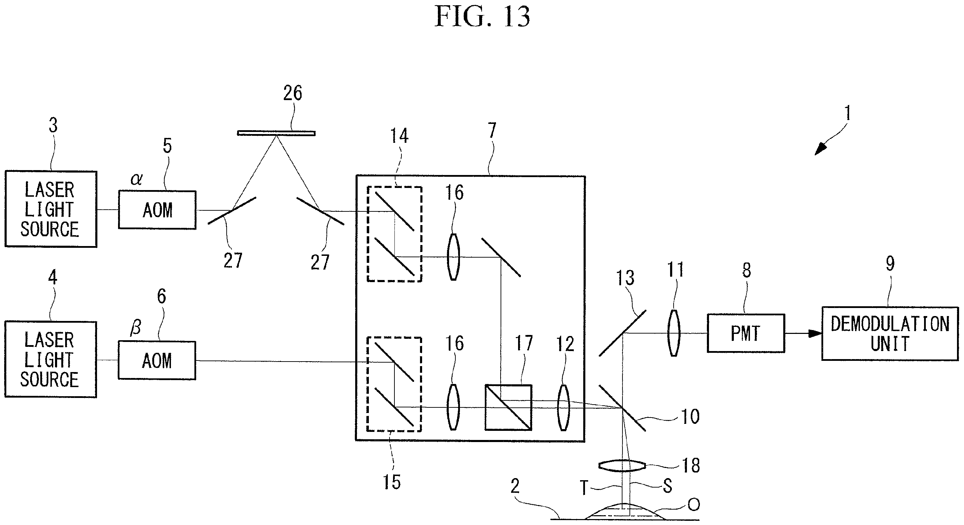

{Fig. 13} Fig. 13 schematically illustrates a modification of the laser microscope in Fig. 1.

{Description of Embodiments}

A laser microscope 1 and a microscopy method according to an embodiment of the present invention will be described below with reference to the drawings.

As shown in Fig. 1, the laser microscope 1 according to this embodiment includes a stage 2 on which a sample O is placed, two acousto-optic devices (AOMs, modulation units) 5 and 6 that respectively superpose periodical intensity modulations of different frequencies on two ultrashort-pulse laser light beams S and T emitted from two laser light sources (light source units) 3 and 4, an illumination optical system 7 that focuses the two ultrashort-pulse laser light beams S and T emitted from the acousto-optic devices 5 and 6 onto different positions of the sample O, a photomultiplier tube (PMT, fluorescence detecting device) 8 that detects fluorescence generated at different focal positions A and B, and a demodulation unit 9 that demodulates the output from the photomultiplier tube 8. In Fig. 1, reference sign 10 denotes a dichroic mirror that splits off the fluorescence from the light paths of the ultrashort-pulse laser light beams S and T, and reference sign 11 denotes a focusing lens.

The two laser light sources 3 and 4 individually emit the ultrashort-pulse laser light beams S and T of the same type. As an alternative to the example shown in Fig. 1 in which two separate laser light sources 3 and 4 are provided, the two ultrashort-pulse laser light beams S and T may be produced by splitting an ultrashort-pulse laser light beam emitted from a single laser light source into two beams by using a beam splitter.

The illumination optical system 7 includes two scanners 14 and 15 that individually scan the two ultrashort-pulse laser light beams S and T, a plurality of relay lenses 16, a beam splitter 17 that multiplexes the two ultrashort-pulse laser light beams S and T, and an objective lens 18 that focuses the multiplexed ultrashort-pulse laser light beams S and T onto the sample O.

The two scanners 14 and 15 are disposed at optically conjugate positions with respect to the pupil position of the objective lens 18, and the ultrashort-pulse laser light beams S and T passing through the relay lenses 16 with different deflection angles are multiplexed at the beam splitter 17. The multiplexed ultrashort-pulse laser light beams S and T are parallel to each other in terms of their optical axes but are positionally shifted and separated from each other in the direction orthogonal to the optical axes, and are focused by the objective lens 18 onto the different focal positions A and B on the focal plane of the objective lens 18. In Fig. 1, reference sign 12 denotes a relay lens that substantially collimates light transmitted through the beam splitter 17. Moreover, reference sign 13 denotes a mirror that reflects the fluorescence traveling from the sample O and transmitted through the dichroic mirror 10 toward the focusing lens 11.

The photomultiplier tube 8 performs photoelectric conversion of the detected fluorescence and outputs a current signal according to the intensity of the fluorescence.

As shown in Fig. 2, the demodulation unit 9 includes an amplifier 19 that converts the current signal output from the photomultiplier tube 8 into a voltage signal and amplifies the voltage signal, two multipliers 22 and 23 that split the voltage signal amplified by the amplifier 19 into two voltage signals and multiply the voltage signals by sine wave signals having modulation frequencies applied by the two acousto-optic devices 5 and 6, and two low-pass filters (LPF) 24 and 25 that allow the outputs from the multipliers 22 and 23 to pass therethrough. In Fig. 2, reference signs 20 and 21 denote frequency generators that oscillate the modulation frequencies applied by the acousto-optic devices 5 and 6.

The principle of demodulation will now be described.

Assuming that a modulation frequency according to the acousto-optic device 5 is defined as $\alpha$, a modulation frequency according to the other acousto-optic device 6 is defined as $\beta$, and a noise frequency is defined as $\gamma$, an electric signal $S(t)$ output from the photomultiplier tube 8 is as follows:

$$S(t) = sin\alpha t + sin\beta t + sin\gamma t$$

In order to focus only on frequencies in the above equation, the weighting coefficients in the respective terms are simplified and are all set to 1.

In order to demodulate the electric signal S(t) based on the modulation frequency $\alpha$, the electric signal S(t) is first multiplied by a sine wave signal having the modulation frequency $\alpha$.

$$S(t) \times sin\alpha t$$

$$= (sin\alpha t + sin\beta t + sin\gamma t) \times sin\alpha t$$

$$= (cos(0) \quad cos2\alpha t)/2$$

$$+ (cos(\beta \quad \alpha)t \quad cos(\alpha + \beta)t)/2$$

$$+ (cos(\gamma \quad \alpha)t \quad cos(\gamma + \alpha)t)/2$$

In this case, cos(0) is a direct-current component, and other terms have frequencies that are not zero. By extracting only the direct-current component from this signal by using the appropriate low-pass filter 24 or 25, only the term with cos(0) derived from the modulation frequency $\alpha$ remains as an output. Accordingly, only the component having the modulation frequency $\alpha$ to be desirably demodulated can be separated. The same applies to the modulation frequency $\beta$.

The microscopy method using the laser microscope 1 according to this embodiment having the above-described configuration will be described below with reference to the drawings.

As shown in Fig. 4, the microscopy method according to this embodiment includes a modulating step S1 of modulating the two ultrashort-pulse laser light beams S and T of the same type emitted from the two laser light sources 3 and 4 based on the different modulation frequencies $\alpha$ and $\beta$ in the acousto-optic devices 5 and 6, respectively, an illuminating step S2 of simultaneously focusing the two modulated ultrashort-pulse laser light beams S and T onto different positions of the sample O, a fluorescence detecting step S3 of detecting fluorescence generated at the two different focal positions A and B and performing photoelectric conversion of the fluorescence, and a demodulating step S4 of demodulating the detected fluorescence based on the two modulation frequencies $\alpha$ and $\beta$ in the acousto-optic devices 5 and 6.

Fig. 5(a) illustrates an example of the pulse train of each of the ultrashort-pulse laser light beams S and T output from the laser light sources 3 and 4.

Fig. 5(b) illustrates an example of a modulation signal superposed on each of the ultrashort-pulse laser light beams S and T in the modulating step S1.

Fig. 5(c) illustrates the pulse train of each of the ultrashort-pulse laser light beams S and T modulated in the modulating step S1 in accordance with the modulation signal in Fig. 5(b).

As shown in Fig. 3, when the two ultrashort-pulse laser light beams S and T are focused onto two different positions of the sample O in the illuminating step S2, the fluorescent material is excited due to a multiphoton excitation effect caused by a local increase in photon density at each of the focal positions A and B, whereby fluorescence is generated. The generated fluorescence is radiated in all directions from each of the focal positions A and B, is scattered within the sample O, and a portion of the fluorescence is collected by the objective lens 18.

Fig. 5(d) illustrates an example of each of the fluorescent signals generated at the focal positions A and B as a result of radiating the ultrashort-pulse laser light beams modulated in this manner onto the sample O.

Since fluorescence is generated simultaneously at the two focal positions A and B, the fluorescence collected by the objective lens 18 and detected by the photomultiplier tube 8 has a mixture of fluorescences generated at the two focal positions A and B and derived from the different ultrashort-pulse laser light beams S and T.

In this case, since the fluorescences derived from the ultrashort-pulse laser light beams S and T inherit the modulation frequencies $\alpha$ and $\beta$ applied to the respective ultrashort-pulse laser light beams, the fluorescences can be separated from each other with high accuracy by being demodulated based on the two modulation frequencies $\alpha$ and $\beta$ in the demodulating step S4.

Specifically, the laser microscope 1 and the microscopy method according to this embodiment are advantageous in that a multiphoton excitation effect is utilized so that electrodes do not have to be inserted, as in a patch-clamp method, whereby the sample O can be observed with low invasiveness. In addition, by performing modulation and demodulation, the fluorescences generated simultaneously at the different focal positions A and B can be separated from each other with high accuracy and be observed.

In particular, in a case where the sample O to be observed includes nerve cells, a typical method involves measuring the response of the nerve cells immediately after, for example, stimulating biological tissue or electrically stimulating the nerve cells. With this embodiment, the responsiveness to such stimulation can be observed simultaneously with respect to a plurality of locations.

The following description relates to a case where images of a plurality of regions of interest (ROI) in a predetermined range set in the sample O are acquired by using the laser microscope 1 and the microscopy method according to this embodiment.

In this case, the two scanners 14 and 15 of the illumination optical system 7 are swiveled by different swivel angles so that the two ultrashort-pulse laser light beams S and T are scanned two-dimensionally over the range of each ROI.

Fig. 6(a) illustrates an example of an 8-pixel-by-8-pixel fluorescence image acquired by two-dimensionally scanning, in the X and Y directions, the ultrashort-pulse laser light beam S modulated based on a single modulation frequency $\alpha$. Fig. 6(b) illustrates a scale indicating the fluorescence intensity in Fig. 6(a). When ultrashort-pulse laser light is scanned from left to right along the fourth row of the image in Fig. 6(a) (i.e., the row indicated by an arrow in Fig. 6(a), Fig. 7(a)), a fluorescence intensity signal is acquired by the photomultiplier tube 8, as shown in Fig. 7(b).

In this example, the modulation frequency $\alpha$ includes two periods while the ultrashort-pulse laser light beam S is scanned over every one-pixel zone. A fluorescence intensity signal acquired in this manner is input to the demodulation unit 9. Then, when the fluorescence intensity signal is multiplied by a sine wave signal having the modulation frequency $\alpha$ and a direct-current component is extracted therefrom by the low-pass filter 24 or 25, a fluorescence intensity signal having the waveform shown in Fig. 7(c) is obtained. This fluorescence intensity signal is not a firsthand fluorescence intensity signal obtained from the sample O but is a demodulated fluorescence intensity signal indicating the component amplitude of the modulation frequency $\alpha$ of that firsthand fluorescence intensity signal.

Although the time windows shown are divided in time units each corresponding to one pixel and are individually demodulated, a waveform expressing changes in a direct-current component obtained by continuously performing demodulation without the divided time windows may be divided based on a time period corresponding to one pixel.

It is worth noting here that the absolute value of the fluorescence intensity signal obtained from the sample O, that is, the absolute value of the waveform in Fig. 7(b), has no relation to the amplitude of the component of the modulation frequency $\alpha$ obtained by demodulation, which corresponds to the waveform in Fig. 7(c).

Specifically, for example, in the leftmost pixel in Fig. 7(a), the fluorescence intensity obtained from the photomultiplier tube 8 has a relatively large direct-current baseline superposed thereon in addition to the synchronous component of the modulation frequency $\alpha$. However, in the pixels in the central area in Fig. 7(a), the synchronous component of the modulation frequency $\alpha$ is dominant, and there is hardly any direct-current baseline. It is conceivable that the baseline in the leftmost pixel is large due to, for example, intrusion of the fluorescence from the other excitation light spot modulated based on the modulation frequency $\beta$. When these are demodulated based on the modulation frequency $\alpha$, the unwanted baseline of the leftmost pixel is eliminated so that only the pure component amplitude of the modulation frequency $\alpha$ is extracted, whereby the signal intensity after the demodulation becomes small, regardless of the fact that the absolute value of the original signal intensity is relatively large. On the other hand, with regard to the pixels in the central area, the maximum value of the original signal intensity thereof is substantially the same level as that of the leftmost pixel, but since the majority thereof is a synchronous component of the modulation frequency $\alpha$, the signal intensity after the demodulation is detected as being larger than that of the leftmost pixel.

The 8-pixel-by-8-pixel image shown in Fig. 6(a) is a grayscale image obtained by detecting and emphasizing the magnitude of a frequency component synchronized with the modulation frequency $\alpha$ in the fluorescence intensity signal from the sample O.

Although the example described here relates to a case where the modulation frequency $\alpha$ includes two periods within a time period corresponding to one pixel, it is preferable that the modulation frequency $\alpha$ include more periods for improving the accuracy of demodulation. One method for achieving this is increasing the modulation frequency $\alpha$, but there is a technical upper limit due to, for example, limitations caused by the response bandwidths of the acousto-optic devices 5 and 6 or by the bandwidth of a detection circuit that includes the photomultiplier tube 8. Another method is extending the time period corresponding to one pixel, but since this leads to deteriorated image resolution or a lower frame rate, these parameters may be tuned depending on what is to be prioritized.

The above description relates to ROI scanning and fluorescence image acquisition using the ultrashort-pulse laser light beam S modulated based on the modulation frequency $\alpha$. Similarly, ROI scanning and fluorescence image acquisition using the ultrashort-pulse laser light beam T modulated based on the modulation frequency $\beta$ are simultaneously performed in a different region within the microscope field of view, and the fluorescence intensities are demodulated individually in the respective ROIs based on the modulation frequencies $\alpha$ and $\beta$ so that fluorescences from both ROI positions can be independently separated and simultaneously acquired.

In this case, the demodulation sometimes cannot be performed with high accuracy even if the modulation frequencies $\alpha$ and $\beta$ are different from each other. Specifically, in the case of two-photon excitation, the intensity P of each ultrashort-pulse laser light beam S or T and the intensity I of the fluorescence generated by the multiphoton excitation effect have the relationship in which I is proportional to $P^2$. In the case of three-photon excitation, I is proportional to $P^3$.

In the case of two-photon excitation, the intensity P of the ultrashort-pulse laser light beam T modulated based on the modulation frequency $\alpha$ is proportional to $(1 + \sin\alpha t)$. Therefore, I is proportional to $(1 + \sin\alpha t)^2$, which is proportional to $(1 + 2\sin\alpha t (\cos 2\alpha t \cos(0))/2)$. Thus, in addition to the modulation frequency $\alpha$, the fluorescence to be obtained contains a $2\alpha$ component, which is twice as large as $\alpha$.

Therefore, if a frequency that satisfies $\beta = 2\alpha$ is set as the modulation frequency $\beta$, the separation cannot be performed with high accuracy during the demodulation. In the case of three-photon excitation, a frequency that satisfies $\beta = 3\alpha$ becomes a problem.

Therefore, by setting the modulation frequencies $\alpha$ and $\beta$ so that they do not satisfy the above relationships, the demodulation can be performed with high accuracy.

Although the above description relates to a method of scanning the ROIs by using the ultrashort-pulse laser light beams S and T and forming the fluorescences into images, the imaging is not necessarily required in the observation of biological cells, and there are times when the user desires only to know temporal changes in fluorescence intensity occurring at a laser irradiation position. In that case, for example, by fixing the ultrashort-pulse laser light beams S and T at different irradiation positions, demodulating the fluorescence intensities generated at that time based on the modulation frequencies $\alpha$ and $\beta$, and continuously acquiring the temporal changes, the responses at both positions can be simultaneously measured with high temporal resolution. However, since continuously focusing the ultrashort-pulse laser light beams S and T only onto specific focal positions would cause the fluorescence of the sample O to quickly fade, there are cases where changes in fluorescence intensities cannot be properly observed. Moreover, if the sample O is a biological sample, there is a problem in that the sample O may be greatly damaged. Furthermore, the subject that the microscope user desires to measure is a region slightly larger than the focal spot of the ultrashort-pulse laser light beam S or T, such as a single cell. There are often cases where the user may desire to observe the overall fluorescence intensity of such a region with high temporal resolution.

Therefore, for example, by performing scanning in micro-ranges based on the raster scan method or in a spiral pattern instead of fixing the focal positions to specific positions, the irradiation ranges of the ultrashort-pulse laser light beams S and T can be scattered, so that fading of the fluorescence and damage to the sample O can be reduced, and each ultrashort-pulse laser light beam can be evenly distributed and radiated onto a single-cell region.

Next, a data analysis method using changes in fluorescence intensities obtained when the two ultrashort-pulse laser light beams S and T given different types of modulation are radiated onto different regions of the sample O will be described.

For example, brain tissue of a living mouse is used as the sample O, and changes in nerve cell activity before and after causing the mouse to perform a specific learning process are observed based on changes in fluorescence intensities. It is assumed that two ROIs 1 and 2 are set within the microscope field of view and changes in fluorescence intensities of the ROIs 1 and 2 are separately acquired.

Fig. 8 illustrates waveforms of simultaneously-acquired changes in the fluorescence intensities of the ROIs 1 and 2 before the learning process. Fig. 9 illustrates waveforms of simultaneously-acquired changes in the fluorescence intensities of the ROIs 1 and 2 after the learning process. It is clear from Fig. 10 that the time correlation of the waveforms is stronger after the learning process than before the learning process. In order to perform such an analysis, it is necessary to acquire the changes in the fluorescence intensities of the ROIs 1 and 2 simultaneously with high temporal resolution. In this regard, the laser microscope 1 and the microscopy method according to this embodiment are advantageous.

Furthermore, this embodiment is not limited to the above-described case where the two ultrashort-pulse laser light beams S and T are focused onto two different positions. Alternatively, three or more ultrashort-pulse laser light beams may be focused onto different positions.

If the application is limited to the observation of the time correlation of changes in the fluorescence intensities in different ROIs, two locations that need to be simultaneously detected are enough even if there are three or more ROIs. In that case, simultaneous detection of a combination of two locations may be repeatedly performed in a round-robin fashion for all ROIs. Although it is possible to simultaneously detect three or more locations, this would lead to a complex structure of the laser microscope.

For example, as shown in Fig. 11, two ROIs are selected from among eight set ROIs, and the strength of the time correlation is determined. Then, as shown in Fig. 12(a) and 12(b), the strength of the time correlation is applied to a correlation matrix in a round-robin fashion. This analysis method is well known in the field of cranial nerve research, and the laser microscope 1 and the microscopy method according to this embodiment are advantageous for such an application.

Furthermore, although this embodiment described above relates to a case where the ultrashort-pulse laser light beams S and T are simultaneously focused onto different positions on the focal plane of the objective lens 18, the ultrashort-pulse laser light beams may be simultaneously focused onto a plurality of positions that are different from each other in the depth direction of the sample O.

In this case, as shown in Fig. 13, for example, a deformable mirror (spatial light modulation device) 26 may be disposed in the light path of one of the ultrashort-pulse laser light beams S and T. In Fig. 13, reference sign 27 denotes bypass mirrors for the light path.

Specifically, the deformable mirror 26 deforms its reflection surface so as to change the wavefront of the ultrashort-pulse laser light beam S to be reflected, whereby the ultrashort-pulse laser light beam S can be focused at a position different, in the depth direction, from the focal plane disposed at the focal length of the objective lens 18.

In place of the spatial light modulation device constituted of the reflective deformable mirror 26, a transmissive spatial light modulation device or a spatial light modulation device constituted of reflective liquid crystal may be used.

Furthermore, as an alternative to or in addition to this embodiment in which the ultrashort-pulse laser light beams S and T are intensity-modulated based on different modulation frequencies, the ultrashort-pulse laser light beams S and T may be intensity-modulated based on different phases.

In this case, as a means for separating the fluorescences excited by the ultrashort-pulse laser light beams S and T from the PMT output having the fluorescences mixed therein, for example, a method of separating components synchronized with modulated phases applied to the fluorescences by a phase locked loop (PLL) circuit can be employed.

{Reference Signs List}

1 laser microscope
3, 4 laser light source (light source unit)
5, 6 acousto-optic device (modulation unit)
7 illumination optical system
8 photomultiplier tube (fluorescence detecting device)
9 demodulation unit
26 deformable mirror (spatial light modulation device)
S1 modulating step
S2 illuminating step
S3 fluorescence detecting step
S4 demodulating step
A, B focal position
O sample
S, T ultrashort-pulse laser light beam

**Claims**

1. A laser microscope (1) comprising:

   a light source unit (3 or 4) that emits ultrashort-pulse laser light beams;
   a modulation unit (5 or 6) that applies different modulations to two ultrashort-pulse laser light beams of the same type emitted from the light source unit(3 or 4);
   an illumination optical system (7) that simultaneously focuses the two ultrashort-pulse laser light beams, to which the different modulations are applied by the modulation unit (5 or 6), onto different positions of a sample;
   a fluorescence detecting device (8) that detects fluorescence generated at a focal position of each ultrashort-pulse laser light beam and performs photoelectric conversion of the fluorescence; and
   a demodulation unit (9) that demodulates an output from the fluorescence detecting device (8) based on modulation information from the modulation unit (5 or 6),
   **characterized in that** the illumination optical system (7) includes two independent scanners (14 and 15) that individually scan the two ultrashort-pulse laser light beams.

2. The laser microscope (1) according to Claim 1, further comprising:

   a spatial light modulation device that modulates the wavefront of at least one of the two ultrashort-pulse laser light beams.

3. The laser microscope (1) according to Claim 1 or 2,
wherein the modulation unit (5 or 6) applies intensity modulation of different wavelengths to the two ultrashort-pulse laser light beams.

4. The laser microscope (1) according to any one of Claims 1 to 3,
wherein the modulation unit (5 or 6) applies intensity modulation of different phases to the two ultrashort-pulse laser light beams.

5. A microscopy method comprising:

a modulating step of applying different modulations to two ultrashort-pulse laser light beams of the same type emitted from a light source unit (3 or 4);
an illuminating step of simultaneously focusing the two ultrashort-pulse laser light beams, to which the different modulations are applied in the modulating step, onto different positions of a sample;
a fluorescence detecting step of detecting fluorescence generated at a focal position of each ultrashort-pulse laser light beam in the illuminating step and performing photoelectric conversion of the fluorescence; and
a demodulating step of demodulating fluorescence signal detected in the fluorescence detecting step based on modulation information in the modulating step,
**characterized in that** the illuminating step includes a scanning step where the two ultrashort-pulse laser light beams are individually scanned by two independent scanners (14 and 15).

## Patentansprüche

1. Lasermikroskop (1), umfassend:

eine Lichtquelleneinheit (3 oder 4), die Ultrakurzimpuls-Laserlichtstrahlen emittiert;
eine Modulationseinheit (5 oder 6), die verschiedene Modulationen auf zwei gleichartige Ultrakurzimpuls-Laserstrahlen anwendet, die von der Lichtquelleneinheit (3 oder 4) emittiert werden;
ein optisches Beleuchtungssystem (7), das die beiden Ultrakurzimpuls-Laserlichtstrahlen, auf die durch die Modulationseinheit (5 oder 6) verschiedene Modulationen angewendet werden, gleichzeitig auf verschiedene Positionen einer Probe fokussiert;
eine Fluoreszenzdetektionsvorrichtung (8), die Fluoreszenz detektiert, die in einer Fokusposition jedes Ultrakurzimpuls-Laserlichtstrahls generiert wird, und eine photoelektrische Umwandlung der Fluoreszenz ausführt; und
eine Demodulationseinheit (9), die eine Ausgabe der Fluoreszenzdetektionsvorrichtung (8) basierend auf Modulationsinformation von der Modulationseinheit (5 oder 6) demoduliert,
**dadurch gekennzeichnet, dass** das optische Beleuchtungssystem (7) zwei unabhängige Scanner (14 und 15) umfasst, welche die beiden Ultrakurzimpuls-Laserlichtstrahlen individuell abtasten.

2. Lasermikroskop (1) nach Anspruch 1, ferner umfassend:

eine Raumlichtmodulationsvorrichtung, welche die Wellenfront mindestens eines der beiden Ultrakurzimpuls-Laserlichtstrahlen moduliert.

3. Lasermikroskop (1) nach Anspruch 1 oder 2, wobei die Modulationseinheit (5 oder 6) Intensitätsmodulation verschiedener Wellenlängen auf die beiden Ultrakurzimpuls-Laserlichtstrahlen anwendet.

4. Lasermikroskop (1) nach einem der Ansprüche 1 bis 3, wobei die Modulationseinheit (5 oder 6) Intensitätsmodulation verschiedener Phasen auf die Ultrakurzimpuls-Laserlichtstrahlen anwendet.

5. Mikroskopieverfahren, umfassend:

einen Modulationsschritt des Anwendens verschiedener Modulationen auf zwei gleichartige Ultrakurzimpuls-Laserlichtstrahlen, die von einer Lichtquelleneinheit (3 oder 4) emittiert werden;
einen Beleuchtungsschritt des gleichzeitigen Fokussierens der beiden Ultrakurzimpuls-Laserlichtstrahlen, auf welche die verschiedenen Modulationen in dem Modulationsschritt angewendet werden, auf verschiedene Positionen einer Probe;

einen Fluoreszenzdetektionsschritt des Detektierens einer Fluoreszenz, die in einer Fokusposition jedes Ultrakurzimpuls-Laserlichtstrahls in dem Beleuchtungsschritt generiert wird, und des Ausführens einer photoelektrischen Umwandlung der Fluoreszenz; und

einen Demodulationsschritt des Demodulierens eines Fluoreszenzsignals, das in dem Fluoreszenzdetektionsschritt detektiert wird, basierend auf Modulationsinformation in dem Modulationsschritt,

**dadurch gekennzeichnet, dass** der Beleuchtungsschritt einen Abtastschritt umfasst, bei dem die beiden Ultrakurzimpuls-Laserlichtstrahlen durch zwei unabhängige Scanner (14 und 15) individuell abgetastet werden.

## Revendications

1. Microscope à laser (1) comprenant :

   une unité de source de lumière (3 ou 4) qui émet des faisceaux de lumière laser à impulsions ultracourtes ;
   une unité de modulation (5 ou 6) qui applique différentes modulations à deux faisceaux de lumière laser à impulsions ultracourtes du même type émis depuis l'unité de source de lumière (3 ou 4) ;
   un système optique d'éclairage (7) qui concentre simultanément les deux faisceaux de lumière laser à impulsions ultracourtes, auxquels les différentes modulations sont appliquées par l'unité de modulation (5 ou 6), sur différentes positions d'un échantillon ;
   un dispositif de détection de fluorescence (8) qui détecte la fluorescence générée au niveau d'une position focale de chaque faisceau de lumière laser à impulsions ultracourtes et réalise une conversion photoélectrique de la fluorescence ; et
   une unité de démodulation (9) qui démodule une sortie du dispositif de détection de fluorescence (8) sur la base d'informations de modulation provenant de l'unité de modulation (5 ou 6),
   **caractérisé par le fait que** le système optique d'éclairage (7) comprend deux dispositifs à balayage indépendants (14 et 15) qui balayent individuellement les deux faisceaux de lumière laser à impulsions ultracourtes.

2. Microscope à laser (1) selon la revendication 1, comprenant en outre :

   un dispositif de modulation spatiale de lumière qui module le front d'onde d'au moins un des deux faisceaux de lumière laser à impulsions ultracourtes.

3. Microscope à laser (1) selon la revendication 1 ou 2, dans lequel l'unité de modulation (5 ou 6) applique une modulation d'intensité de différentes longueurs d'onde aux deux faisceaux de lumière laser à impulsions ultracourtes.

4. Microscope à laser (1) selon l'une quelconque des revendications 1 à 3, dans lequel l'unité de modulation (5 ou 6) applique une modulation d'intensité de différentes phases aux deux faisceaux de lumière laser à impulsions ultracourtes.

5. Procédé de microscopie comprenant :

   une étape de modulation pour appliquer différentes modulations à deux faisceaux de lumière laser à impulsions ultracourtes du même type émis depuis une unité de source de lumière (3 ou 4) ;
   une étape d'éclairage pour concentrer simultanément les deux faisceaux de lumière laser à impulsions ultracourtes, auxquels les différentes modulations sont appliquées dans l'étape de modulation, sur différentes positions d'un échantillon ;
   une étape de détection de fluorescence pour détecter la fluorescence générée au niveau d'une position focale de chaque faisceau de lumière laser à impulsions ultracourtes dans l'étape d'éclairage et réaliser une conversion photoélectrique de la fluorescence ; et
   une étape de démodulation pour démoduler un signal de fluorescence détecté dans l'étape de détection de fluorescence sur la base d'informations de modulation dans l'étape de modulation,
   **caractérisé par le fait que** l'étape d'éclairage comprend une étape de balayage dans laquelle les deux faisceaux de lumière laser à impulsions ultracourtes sont balayés individuellement par deux dispositifs à balayage indépendants (14 et 15).

FIG. 1

FIG. 2

EP 3 141 942 B1

# FIG. 3

# FIG. 4

```
        ┌─────────────┐
        │    START    │
        └──────┬──────┘
               │
               ▼
        ┌─────────────┐
        │  MODULATE   │────── S1
        └──────┬──────┘
               │
               ▼
        ┌─────────────┐
        │  ILLUMINATE │────── S2
        └──────┬──────┘
               │
               ▼
        ┌─────────────┐
        │    DETECT    │
        │ FLUORESCENCE │────── S3
        └──────┬──────┘
               │
               ▼
        ┌─────────────┐
        │  DEMODULATE │────── S4
        └──────┬──────┘
               │
               ▼
        ┌─────────────┐
        │     END     │
        └─────────────┘
```

(a)

(b)

(c)

(d)

FIG. 5

# FIG. 6

(a)                    (b)

STRONG
FLUORESCENCE

WEAK
FLUORESCENCE

FIG. 7

(a)

(b)

FLUORESCENCE
INTENSITY

TIME

(c)

TIME

FIG. 8

FIG. 9

ROI1 : FLUORESCENCE INTENSITY

TIME

ROI2 : FLUORESCENCE INTENSITY

TIME

EP 3 141 942 B1

# FIG. 10

# FIG. 11

FIG. 12

FIG. 13

EP 3 141 942 B1

**EP 3 141 942 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2011023593 A1
- US 6577417 B1
- JP 2005227145 A
- JP 2010008082 A